(19) Europäisches Patentamt
European Patent Office
Office européen des brevets

(11) Veröffentlichungsnummer: **0 114 020**
**A1**

# (12) EUROPÄISCHE PATENTANMELDUNG

(21) Anmeldenummer: **83440005.3**

(22) Anmeldetag: **12.01.83**

(51) Int. Cl.³: **A 01 D 53/08**, A 01 D 75/20

(43) Veröffentlichungstag der Anmeldung: **25.07.84**
**Patentblatt 84/30**

(84) Benannte Vertragsstaaten: **BE DE NL SE**

(71) Anmelder: **Outils Wolf, Société à responsabilité limitée,**
**Rue de l'Industrie, F-67160 Wissembourg (FR)**

(72) Erfinder: **Der Erfinder hat auf seine Nennung verzichtet**

(74) Vertreter: **Nuss, Pierre, 10, rue Jacques Kablé,**
**F-67000 Strasbourg (FR)**

## (54) Sicherheitsvorrichtung für Sichelrasenmäher mit drehenden Messern.

(57) Die vorliegende Erfindung bezieht sich auf eine automatische Sicherheitsvorrichtung für Sichelrasenmäher mit drehenden Messern.

Sicherheitsvorrichtung, gekennzeichnet durch eine automatische Sicherheitskupplung bestehend aus einer Rolle (1) zum Spannen eines dem Antrieb der Welle des Messers (3) dienenden Riemens (2), wobei die Spannrolle an einem durch eine Feder (5) belasteten Kupplungshebel (4) angebracht ist, der sich bei eingelassener Kupplung gegen den Aufnahmebehälter (6) oder ein Ablenkblech abstützt, und eine Bandbremse (7), die mit dem Ende des Kupplungshebel (4) verbunden ist und teilweise die Welle (8) des Messers (3) umfasst.

Ein von der Lenkstange aus zu betätigendes Bedienungselement sorgt für die Verriegelung des Aufnahmebehälters (6) oder des Ablenkbleches bei eingekuppeltem Messer (3).

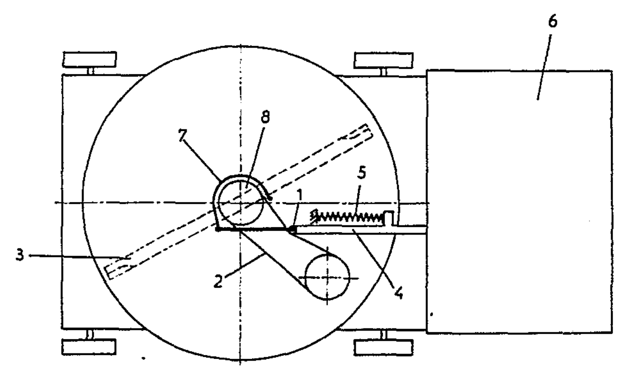


EP 0 114 020 A1

OUTILS WOLF, société à responsabilité limitée
67160 WISSEMBOURG (Frankreich)

# Sicherheitsvorrichtung für Sichelrasenmäher mit drehenden Messern

Die vorliegende Erfindung bezieht sich auf Sicherheitseinrichtungen für Sichelrasenmäher und insbesondere auf eine automatische Sicherheitsvorrichtung für einen solchen Mäher.

Zur Zeit werden verschiedene Einrichtungen mit dem Zweck gebraucht, das Messer vollständig anzuhalten oder mindestens den Motor eines Rasenmähers auf niedrige Drehzahl zu bringen, wenn der Graskorb oder Beutel oder wohl das Ablenkblech entfernt wird, so dass Verletzungen durch Steinwurf oder dergleichen oder dadurch, dass jemand in den Arbeitsbereich des Messers hineingreift, ausbleiben.

Solche Einrichtungen bestehen meist aus einem Gestänge und/oder Bowdenzügen, die durch Einwirken auf den Vergaser die Motordrehzahl verringern oder die eine Kupplung betätigen, so dass bei der Abnahme des Grasaufnahmebehälters oder des Ablenkbleches das Messer vollkommen abgeschaltet ist.

Diese Einrichtungen gewährleisten jedoch dann nicht eine ausreichende Unfallsicherheit, wenn z.B. der Grasbehälter für die Grasaufnahme oder das Ablenkblech nicht einwandfrei eingehakt worden ist, während andererseits das automatische Reduzieren der Motorendrehzahl das Risiko nur vermindert ohne es vollständig zu beheben.

Weiterhin sind elektrische Vorrichtungen bekannt, die den Motorzündkreis unterbrechen, falls sämtliche Sicherheitsvorkehrungen nicht getroffen worden sind, so dass man sich dann der Mühe unterziehen muss, den Motor jedesmal wieder anzulassen.

Bei noch weiteren bekannten Handsteuereinrichtungen, wie z.B. von der Lenkstange aus betätigten Bremskupplungen, kann zwar das Schneidmesser vollkommen angehalten werden. Die Sicherheit des Anwenders wird jedoch nicht gewährleistet, wenn er diese Betätigung vergisst. Weiterhin ist ein unbeabsichtigtes Inbetriebsetzen der Schneidmesser auch bei nicht anmontiertem Grasbehälter oder Ablenkblech immer noch möglich.

Letztlich sind mechanische, bei Aushaken des Sammlers oder des Ablenkbleches wirksame Verschlussvorrichtungen für den Auswurfkanal in Vorschlag gebracht worden. Die Wirksamkeit dieser Einrichtungen wird jedoch bei verstopftem Auswurfkanal vermindert, wobei ihre Funktion gestört wird, so dass bei immer noch drehendem Schneidmesser die Gefahr nicht behoben wird, weil die Einrichtungen nur gegen die Quelle der Gefahr schützen.

Der vorliegenden Erfindung liegt die Aufgabe zugrunde, diese Nachteile zu beseitigen.

Zu diesem Zweck hat die Erfindung eine Sicherheitsvorrichtung für Sichelrasenmäher mit drehenden Messern zum Gegenstand, gekennzeichnet durch eine automatische Sicherheitskupplung bestehend aus einer Rolle zum Spannen eines dem Antrieb der Welle des Messers dienenden Riemens, wobei die Spannrolle an einem durch eine Feder belasteten Kupplungshebel angebracht ist, der sich bei eingelassener Kupplung gegen den Aufnahmebehälter oder ein Ablenkblech abstützt und eine Bandbremse, die mit dem Ende des Kupplungshebels verbunden ist und teilweise die Welle des Messers umfasst. Ein von der Lenkstange aus zu betätigendes Bedienungselement sorgt für die Verriegelung des Aufnahmebehälters oder des Ablenkbleches bei eingekuppeltem Messer.

Weitere Merkmale, Vorteile und Einzelheiten der Erfindung sind der nun folgenden Beschreibung einer bevorzugten Ausführungsform anhand der schematischen Zeichnungen zu entnehmen. Es zeigen :

Figur 1 eine Draufsicht sowie einen Schnitt durch einen erfindungsgemäss ausgerüsteten Rasenmäher in der Messer-Antriebsstellung,

Figur 2 eine Figur 1 entsprechende Ansicht bei abgeschaltetem Messer, und

Figur 3 eine Seitenansicht sowie einen Schnitt des Rasenmähers gemäss Figur 1.

Gemäss der Erfindung und wie insbesondere in Figuren 1 und 3 beispielsweise gezeigt, besteht die automatische Sicherheitsvorrichtung für Sichelrasenmäher mit drehenden Messern im wesentlichen aus einer Spannrolle 1 für einen Riemen 2, der die Welle des Messers 3 antreibt, wobei die Spannrolle 1 an einem Kupplungshebel 4 angebracht ist, auf den eine Feder 5 wirkt, deren anderes Ende sich bei eingelegter Kupplung (Figuren 1 und 3) gegen einen Grasaufnahmebehälter 6 oder ein nicht dargestelltes Ablenkblech abstützt, und aus einer Bandbremse 7.

Die Bandbremse 7 ist mit dem Ende des die Spannscheibe tragenden Hebels 4 verbunden und umfasst zum Teil die Achse 8 der Klinge 3, während das andere Ende in an sich bekannter Weise am Mähergehäuse verankert ist.

Die Verriegelvorrichtung kann vorteilhaft als Kipphebel ausgebildet sein, der von der Lenkstange aus über einen Bowdenzug oder dergleichen gegen die Wirkung einer Feder betätigbar ist, zur Verriegelung des Aufnahmebehälters oder des Ablenkblechs bei eingelassener Kupplung.

Es folgt nun eine Beschreibung der Arbeitsweise der erfindungsgemässen Vorrichtung.

Beim Befestigen des Behälters 6 am Gehäuse des Mähers wird durch den Kupplungsbetätigungshebel 4 die Rolle 1 gegen den Riemen 2, der mit der Welle des Messers 3 verbunden ist, gedrückt, so dass das Messer in Drehung versetzt wird. Beim Entfernen des Behälters 6 wird das entsprechende Ende des Hebels 4 freigegeben, so dass der Hebel 4 durch die Wirkung der Feder 5 samt Rolle 1 vom Riemen 2 abgenommen wird, wodurch der Antrieb des Messers 3 unterbrochen wird. Gleichzeitig mit der Auslenkung des Hebels 4 wird die Bandbremse 7 unter Zugspannung versetzt und gegen die Achse bzw. Nabe 8 gelegt, die dadurch unter Stillsetzen des sich bis jetzt drehenden Messers blockiert wird.

Mit der Erfindung lassen sich Sichelrasenmäher mit Sicherheitsvorrichtungen herstellen, bei denen das Auskuppeln des Messers während des ganzen Vorgangs der Abnahme des Behälters oder des Ablenkblechs gewährleistet ist. Es ist weiterhin mit der Erfindung möglich, den Motor des Sichelmähers ohne Risiko anzulassen, weil das Messer in abgeschaltetem Zustand bleibt.

Es ist klar, dass die Erfindung sich nicht auf die beschriebene und anhand der beiliegenden Zeichnungen veranschaulichte Ausführungsform beschränkt. Abänderungen bleiben möglich, die sich insbesondere auf die Gestaltung der verschiedenen Maschinenelemente und auf den Austausch von patentrechtlichen Äquivalenten beziehen können, ohne dadurch den Schutzumfang der Erfindung zu verlassen.

- P A T E N T A N S P R Ü C H E -

1. Sicherheitsvorrichtung für Sichelrasenmäher mit drehenden Messern, gekennzeichnet durch eine automatische Sicherheitskupplung bestehend aus einer Rolle (1) zum Spannen eines dem Antrieb der Welle des Messers (3) dienenden Riemens (2), wobei die Spannrolle an einem durch eine Feder (5) belasteten Kupplungshebel (4) angebracht ist, der sich bei eingelassener Kupplung gegen den Aufnahmebehälter (6) oder ein Ablenkblech abstützt, und eine Bandbremse (7), die mit dem Ende des Kupplungshebels (4) verbunden ist und teilweise die Welle (8) des Messers (3) umfasst.

2. Sicherheitsvorrichtung nach Anspruch 1, dadurch gekennzeichnet, dass ein zusätzliches Bedienungselement vorteilhaft als von der Lenkstange aus betätigbarer, über einen Bowdenzug gegen die Wirkung einer Feder betätigbarer Kipphebel ausgebildet ist zur Verriegelung des Aufnahmebehälters oder des Ablenkblechs bei eingelassener Kupplung.

0114020

Fig.1

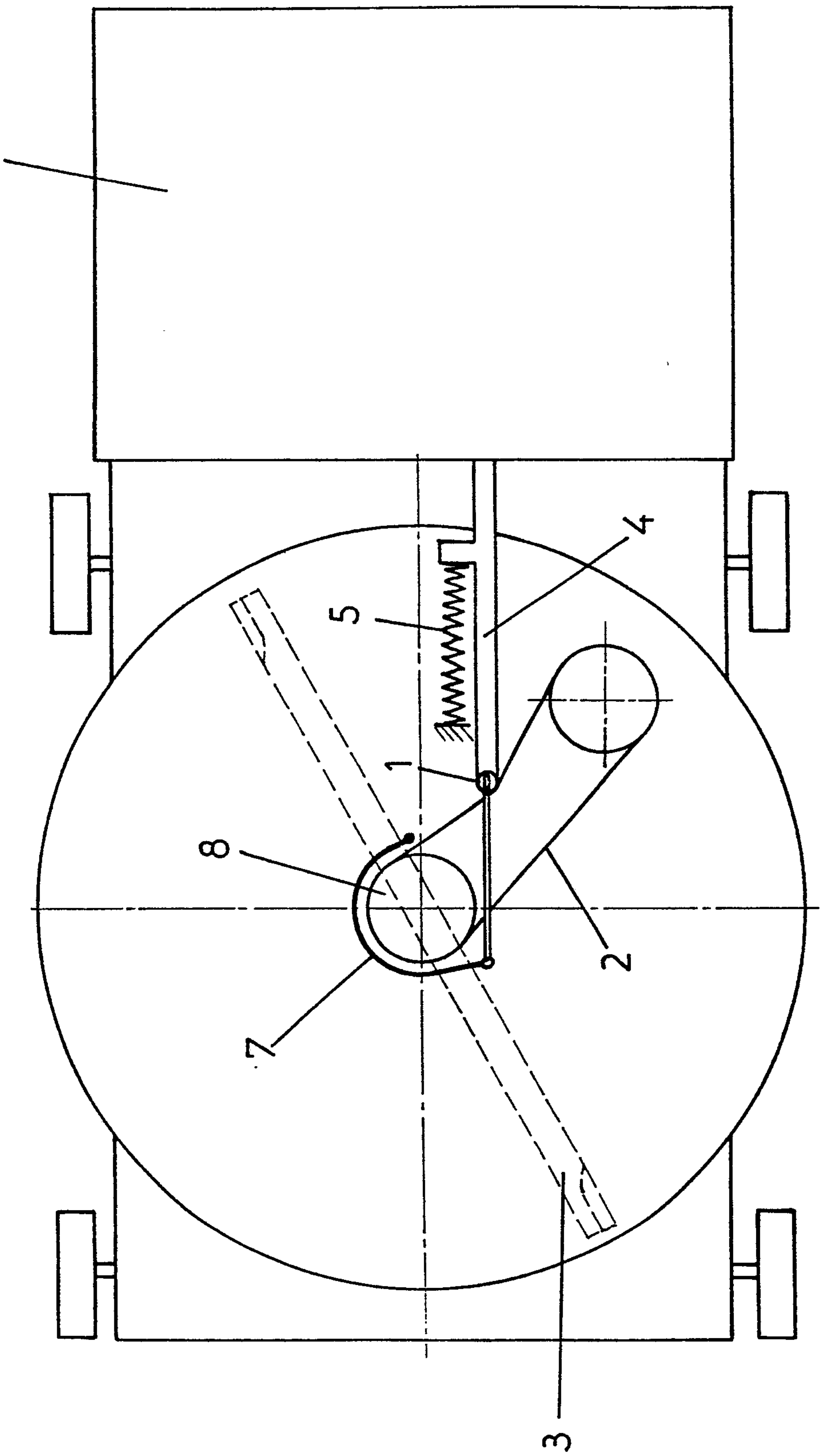

0114020

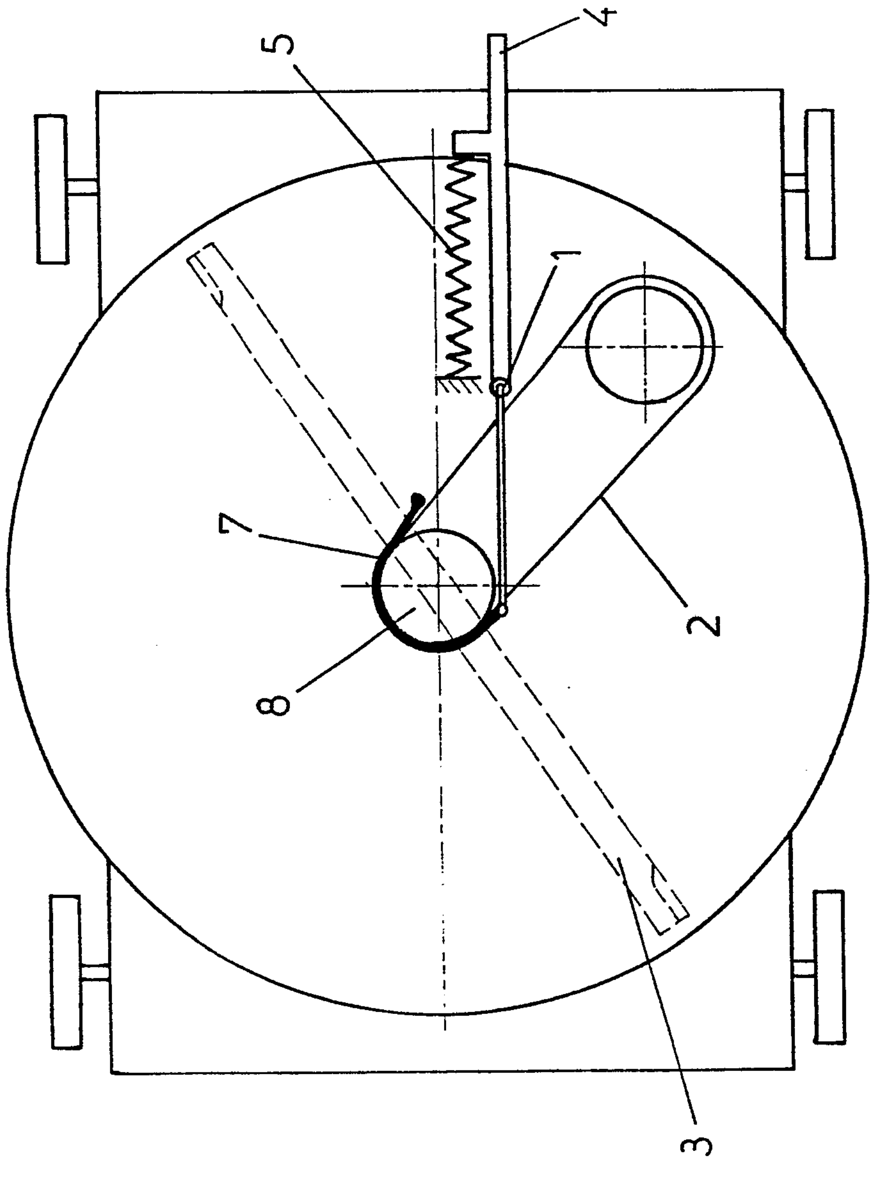


Fig.2

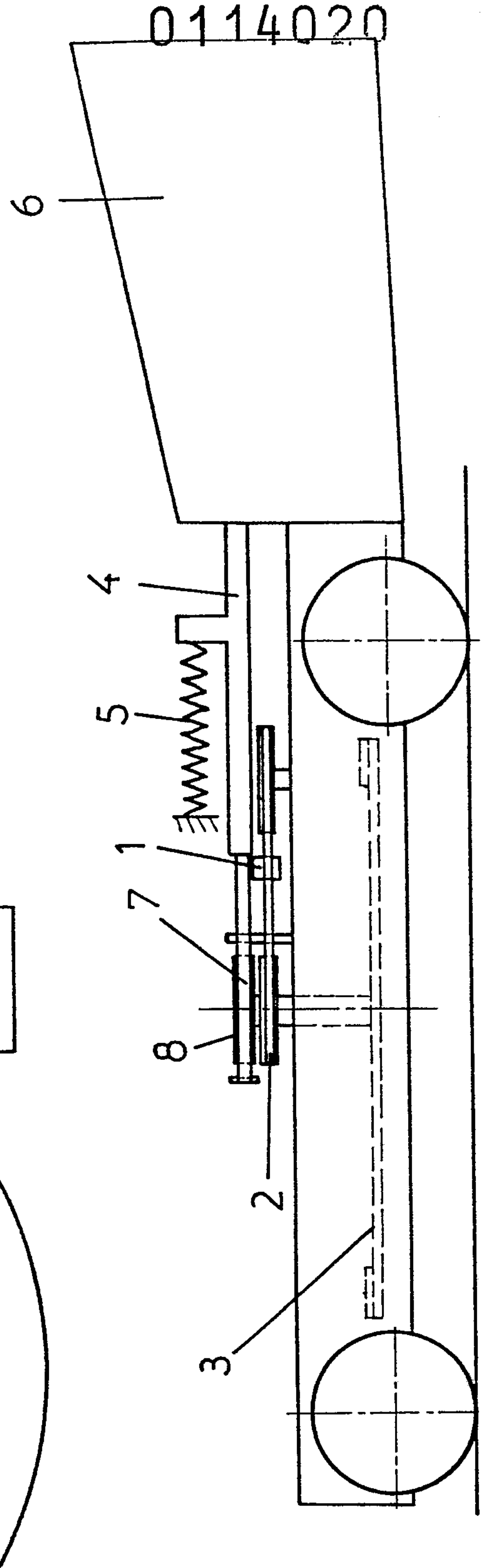


Fig.3

Europäisches Patentamt

**EUROPÄISCHER RECHERCHENBERICHT**

0114020
Nummer der Anmeldung

EP 83 44 0005

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | | | A 01 D 53/08<br>A 01 D 75/20 |
| E | FR-A-2 512 323 (OUTILS WOLF)<br>* Insgesamt *<br>--- | 1,2 | |
| Y | US-A-4 345 418 (ARIZPE)<br>* Spalte 2, Zeile 63 - Spalte 3, Zeile 10; Spalte 6, Zeile 15 - Spalte 7, Zeile 4 *<br>--- | 1,2 | |
| Y | US-A-4 058 957 (ROSEBERRY)<br>* Insgesamt *<br>--- | 1 | |
| A | FR-A-2 078 990 (WOLF)<br>* Ansprüche 1,7,9 *<br>--- | 1 | |
| A | US-A-3 367 459 (RUBIN)<br>* Insgesamt *<br>--- | 1 | RECHERCHIERTE SACHGEBIETE (Int. Cl. 3) |
| A | US-A-4 043 102 (UHLINGER)<br>* Insgesamt *<br>--- | 1,2 | A 01 D |
| A | DE-A-2 952 126 (WIEDENMANN)<br>* Anspruch 1 *<br>----- | 2 | |

Der vorliegende Recherchenbericht wurde für alle Patentansprüche erstellt.

| Recherchenort | Abschlußdatum der Recherche | Prüfer |
|---|---|---|
| DEN HAAG | 26-09-1983 | DE LAMEILLIEURE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82